# EUROPÄISCHE PATENTSCHRIFT

(11) **EP 1 015 751 B1**
(45) Veröffentlichungstag und Bekanntmachung des Hinweises auf die Patenterteilung: **05.12.2001**
(21) Anmeldenummer: 97942031.2
(22) Anmeldetag: 15.09.1997
(51) Int. Cl.: F02M 35/02, F02M 35/024, B01D 46/42

(54) **LUFTFILTER**
AIR FILTER
FILTRE A AIR

(30) Priorität: 21.09.1996 DE 19638790
(43) Veröffentlichungstag der Anmeldung: 05.07.2000
(73) Patentinhaber: FILTERWERK MANN & HUMMEL GmbH, 71631 Ludwigsburg (DE)
(72) Erfinder: ERNST, Volker, D-74343 Sachsenheim (DE); LEIPELT, Rudolf, D-71672 Marbach (DE)
(74) Vertreter: Voth, Gerhard, Dipl.-Ing.
(86) Internationale Anmeldenummer: EP9705044
(87) Internationale Veröffentlichungsnummer: WO9812430

(56) Entgegenhaltungen:
- EP-A- 0 334 719
- DE-A- 19 508 678
- US-A- 5 030 264
- US-A- 5 213 596

## Beschreibung

Die Erfindung betrifft ein Luftfilter, insbesondere ein Ansaugluftfilter für Brennkraftmaschinen nach dem Oberbegriff des Hauptanspruchs.

Aus der US PS 40 06 000 ist ein Luftfilter zur Ansaugluftfiltrierung mit einem im wesentlichen zylindrischen Gehäuse bekannt, welches einen Rohlufteinlaß aufweist, der tangential am Gehäuse angeordnet ist und wobei sich in diesem Gehäuse ein Filtereinsatz befindet. der radial durchströmt wird.

Das Gehäuse selbst ist über einen Bajonettverschluß an einen zylinderförmigen Ansaugluftsammler anschließbar. In diesem Ansaugluftsammler befindet sich eine Sicherheitspatrone, die bei einem Wechsel des Filtereinsatzes ein Eindringen von Schmutz und Staub in den Ansaugluftstutzen vermeiden soll.

Eine Abdichtung zwischen der Sicherheitspatrone und dem Filtereinsatz erfolgt dadurch, daß nach dem Einrasten des Bajonettverschlusses eine axiale Verschiebung des Filtereinsatzes in Richtung der Sicherheitspatrone erfolgt, durch welche die Stirnseite des Filtereinsatzes an der Stirnseite der Sicherheitspatrone zur Anlage kommt.

Diese axiale Verschiebung wird mit einer an der Stirnwand des Gehäuses angeordneten Verstellschraube vorgenommen, die eine axiale Bewegung auf die Endscheibe des Filtereinsatzes ausübt.

Ein Nachteil dieser bekannten Einrichtung besteht darin, daß zum Ein- und Ausbauen des Filtereinsatzes ein sehr großer Freiraum um das Gehäuse vorhanden sein muß.

Zunächst muß - um den Bajonettverschluß zu lösen - eine gewisse axiale Beweglichkeit möglich sein. Zum anderen ist das erforderliche Drehen der Einstellschraube zum axialen Verschieben des Filtereinsatzes nur möglich, wenn im Bereich dieser Einstellschraube genügend Platz zur manuellen Bedienbarkeit vorgesehen ist. Diese Art von Aufbau des Ansaugluftfilters ist daher dort nicht geeignet, wo beengte Platzverhältnisse vorzufinden sind.

Aus der DE 39 18 347 ist ein Ansaugluftfilter für eine Brennkraftmaschine bekannt, bei der nur eine geringe axiale Beweglichkeit des Gehäuses beim Einbzw. Ausbauen erforderlich ist. Hierzu ist ein Filtertopf vorgesehen, der in Gleitschuhe gesteckt wird und mittels einer Kippbewegung an einem Aufnahmeteil befestigt werden kann.

Wenn auch hier unter sehr beengten Platzverhältnissen ein Austausch des Filterelementes möglich ist, so besteht doch die Gefahr, daß bei Schwingungen oder Erschütterungen das Gehäuse in Resonanzschwingungen gerät und Dichtheitsprobleme auftreten.

Der Erfindung liegt daher die Aufgabe zugrunde, die genannten Nachteile zu vermeiden und eine kompakte Filteranordnung zu schaffen, die bei einem geringen Freiraum und geringem Platzbedarf eine zuverlässige Partikelabscheidung gewährleistet.

Diese Aufgabe wird ausgehend von dem Oberbegriff des Hauptanspruches durch dessen kennzeichnenden Merkmale gelöst.

Der wesentliche Vorteil der Erfindung ist darin zu sehen, daß das Filterelement, welches üblicherweise ein quaderförmiges Element ist und relativ viel Raum für den Ein- und Ausbau benötigt, derart mit einer Schwenkbewegung in das Gehäuse einsetzbar ist, daß nur ein minimaler Raum für den Ein- und Ausbau benötigt wird.

Es ist zweckmäßig, den Filtereinsatz aus einem Trägerelement und einem Filterelement aufzubauen. Damit besteht die Möglichkeit, das Filterelement, welches im wesentlichen aus einem zickzackförmig gefalteten Filterpapier und einer Dichtung besteht, problemlos zu entsorgen, während das Trägerelement mehrfach verwendbar ist.

Gemäß einer Ausgestaltung der Erfindung ist am Gehäuse ein Anlageelement mit einer Gleitführung ausgestattet. Diese Gleitführung ist gleichzeitig der Angelpunkt für den Filtereinsatz und beispielsweise eine Art Hohlkehle, welche eine Drehachse des Filtereinsatzes aufnimmt.

Eine weitere vorteilhafte Ausgestaltung der Erfindung sieht vor, das Gehäuse mit einem schwenkbaren Deckel zu versehen. Dieser Deckel verschließt den Rohluftraum des Gehäuses und verhindert das Eindringen von Schmutz oder Falschluft.

In einer alternativen Ausgestaltung kann der Deckel unmittelbar mit dem Filtereinsatz verbunden sein. Damit wird der Bauteilaufwand noch stärker reduziert und der Ein- und Ausbau des Filtereinsatzes bzw. des Filterelementes gestaltet sich noch einfacher.

Weiterbildungsgemäß ist der Deckel bzw. der Filtereinsatz mit einer Rast- oder Schnappverbindung versehen, um eine zuverlässige und einfach zu bedienende Verbindung zu dem Gehäuse herzustellen.

Wie bereits erwähnt, besteht das Filterelement aus einem zickzackförmig gefalteten Filtermaterial, einem Papierfiltermaterial oder einem Vliesmaterial, wobei eine aufwendige Konstruktion nicht erforderlich ist, lediglich eine umlaufende Dichtung ist an dem Filterelement vorzusehen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen erläutert: Die Zeichnungen zeigen:
- Figur 1: die Schnittdarstellungen eines Luftfilters mit eingebautem Filterelement
- Figur 2: eine Variante eines Luftfilters in der Offenstellung
- Figur 3: die in Figur 2 gezeigte Variante in der Schließstellung

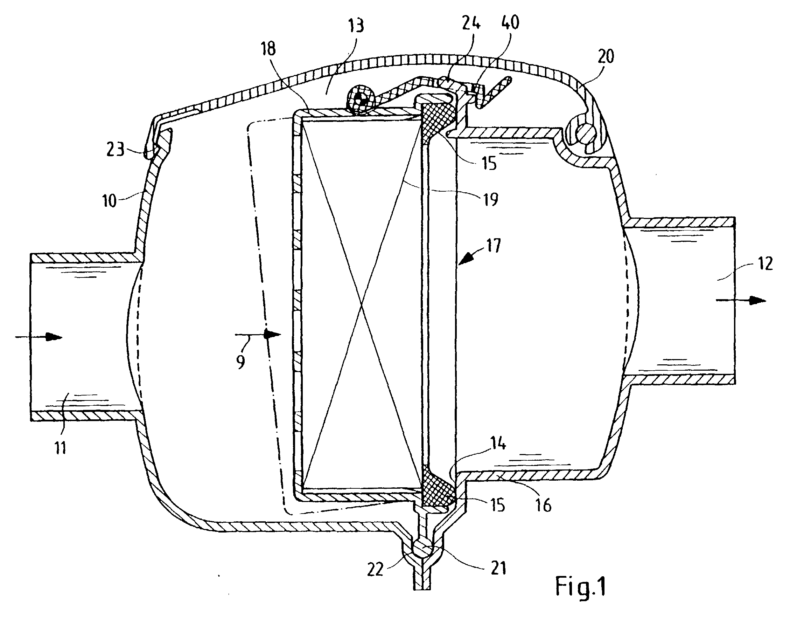

Das Luftfilter gemäß Figur 1 besteht aus einem Gehäuse 10, das mit einem Rohlufteinlaß 11 versehen ist sowie einem Reinluftauslaß 12. Im oberen Bereich weist das Gehäuse 10 eine Öffnung 13 auf, die mit einem Deckel 20 verschlossen ist, In dem Gehäuse befindet sich ein Anlageelement 16 mit einer Dichtfläche 14. Diese Dichtfläche 14 korrespondiert mit einem Dichtelement 15, welches an dem Filtereinsatz 17 angeordnet ist. Der Filtereinsatz 17 besteht aus einem Trägerelement 18 und einem Filterelement 19. Der Filtereinsatz 17 ist am unteren Ende mit einer Achse 21 versehen, die zusammen mit dem Achslager 22 im Gehäuse 10 ein Schwenkscharnier bildet. Die über den Rohlufteinlaß zugeführte Luft gelangt gemäß dem Pfeil 9 durch das Filterelement 19 und verläßt gereinigt über den Reinluftauslaß 12 das dargestellte Luftfilter. Das Luftfilter dient insbesondere für die Ansaugluft einer Brennkraftmaschine und ist in zweckmäßiger Weise im Motorraum eines Kraftfahrzeuges oder in unmittelbarer Nähe einer Brennkraftmaschine angeordnet. Zum Austausch des Filterelementes 19 wird der Deckel 20, der über eine Rast- oder Schnappverbindung 23 mit dem Gehäuse verbunden ist, geöffnet, anschließend ein an dem Filtereinsatz 17 angeordneter Bügelverschluß 40 gelöst, der Filtereinsatz 17 nach links in die strichpunktiert dargestellte Stellung geschwenkt und nach oben herausgezogen. Die Schwenkbewegung ist erforderlich, damit sich das Dichtelement 15 von dem Anlageelement 16 entfernt und keine Scherkräfte auf die Dichtung beim Herausnehmen bzw. beim Einsetzen des Filterelementes 19 wirksam werden können. Zum Verhindern des Einschiebens eines neuen Filtereinsatzes entlang der Dichtfläche 14 ist ein Rand 24 vorgesehen. Dieser Rand läßt ein Anlegen des Dichtelementes 15 an der Dichtfläche 14 erst zu, wenn sich der Filtereinsatz 17 in der unteren Position befindet, das heißt, wenn die Achse 21 bereits im Achslager 22 anliegt.

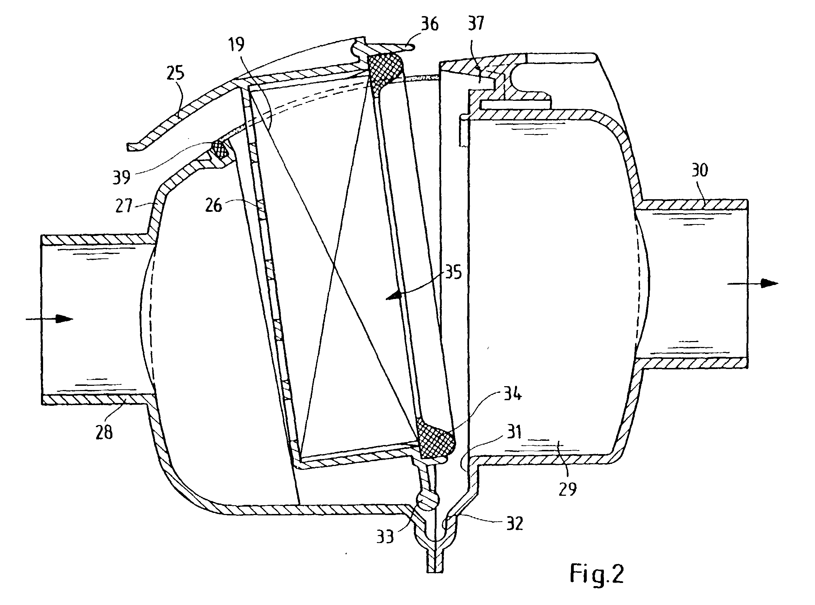

Figur 2 zeigt eine Variante eines Luftfilters bei der ein Deckel 25 bereits an dem Filtereinsatz 26 integriert ist. Dies hat den Vorteil, daß beim Öffnen des Deckels gleichzeitig der Filtereinsatz 26 geschwenkt wird und anschließend lediglich herausgenommen werden muß. Der Filtereinsatz 26 ist in dem Gehäuse 27 mit Rohlufteinlaß 28 angeordnet. Im Reinluftbereich 29 des Gehäuses befindet sich eine Dichtfläche 31. Das Gehäuse ist mit einer Gleitführung 32 versehen. Der Filtereinsatz 26 wird von oben mit seinem Lagerelement 33 in die Gleitführung 32 eingeschoben und anschließend in die Endposition, das heißt, in die Position geschwenkt, in welcher das Dichtelement 34 an der Dichtfläche 31 anliegt. Dichtelement 34 und Filterelement 35 bilden eine Einheit. welche aus dem Filtereinsatz 26 entnommen werden kann.

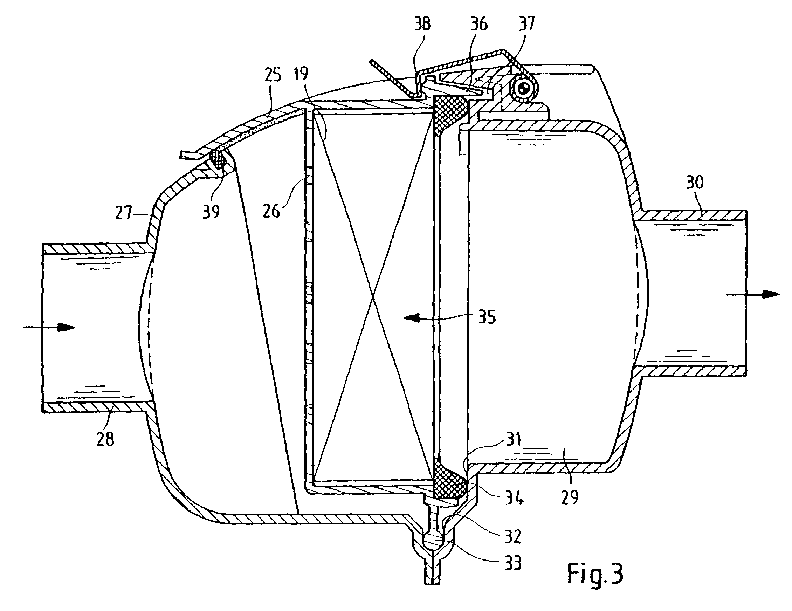

Figur 3 zeigt die geschlossene Stellung des in Figur 2 gezeigten Luftfilters. Gleiche Teile sind mit gleichen Bezugszeichen versehen. Der Deckel 25 greift mit einer Lasche 36 in eine Nut 37 des Gehäuses. Das Verschließen des Deckels am Gehäuse erfolgt über eine Rastverbindung oder, wie hier dargestellt, mit einem Federbügel 38. Am linksseitigen Ende des Deckels und an den beiden hier nicht dargestellten Seiten liegt dieser auf einer umlaufenden Dichtung 39 des Gehäuses auf und verschließt damit den Rohluftraum gegen den Zutritt von Falschluft. Das Filterelement 35 ist als Einlageteil für den Filtereinsatz 26 gestaltet und kann problemlos ausgetauscht werden.

## Patentansprüche

1. Luftfilter, insbesondere für die Ansaugluft einer Brennkraftmaschine mit einen in einem Gehäuse (10) angeordneten Filtereinsatz (17), wobei das Gehäuse (10) einen Rohlufteinlaß (11) und einen Reinluftauslaß (12) aufweist sowie eine Öffnung (13) zum Einführen des Filtereinsatzes (17), wobei der Filtereinsatz (17) aus einem Trägerelement (18) und einem Filterelement (19) besteht und an einer Dichtfläche (14) unter Zwischenschaltung eines Dichtelements (15) anlegbar ist, daß das Gehäuse (10) ein Anlageelement (16) für den Filtereinsatz (17) aufweist, **dadurch gekennzeichnet, daß** der Filtereinsatz (17) mit einer Schwenkachse (21) versehen ist, die zusammen mit einem Achslager (22) im Gehäuse (10) ein Schwenkscharnier bildet und wobei der Filtereinsatz (17) mit einer um das Anlageelement (16) geführten Schwenkbewegung in die Endposition gelangt.

2. Filter nach Anspruch 1, **dadurch gekennzeichnet, daß** das Gehäuse (10) mit einem schwenkbaren Deckel (20) versehen ist.

3. Filter nach Anspruch 1 oder 2, **dadurch gekennzeichnet, daß** der Filtereinsatz (26) mit einem Deckel (25) versehen ist, welcher das Gehäuse (27) abdichtend verschließt.

4. Filter nach einem der vorherigen Ansprüche, **dadurch gekennzeichnet, daß** der Filtereinsatz (26) und/oder der Deckel (25) mit einer Rast- oder Schnappverbindung (38) versehen ist.

5. Filter nach einem der vorherigen Ansprüche, **dadurch gekennzeichnet**, das das Filterelement (35) ein zickzackförmig gefaltetes Plattenfilter ist, welches eine umlaufende Dichtung (34) aufweist.

## Claims

1. Air filter, more especially for the intake air of an internal combustion engine, which filter includes a filter insert (17) disposed in a housing (10), the housing (10) having an unfiltered air inlet (11) and a filtered air outlet (12), as well as an aperture (13) for the introduction of the filter insert (17), the filter insert 17) being formed from a carrier element (18) and a filter element (19) and being able to be fitted onto a sealing face (14) with the interposition of a sealing element (15), and the housing (10) having an abutment portion (16) for the filter insert (17), **characterised in that** the filter insert (17) is provided with a pivotal shaft (21) which, together with a shah bearing (22) in the housing (10), forms a pivotal hinge, and wherein the filter insert (17) passes into the end position with a pivotal movement guided towards the abutment portion (16).

2. Filter according to claim 1, **characterised in that** the housing (10) is provided with a pivotable cover (20).

3. Filter according to claim 1 or 2, **characterised in that** the filter insert (26) is provided with a cover (25), which sealingly closes the housing (27).

4. Filter according to one of the previous claims, **characterised in that** the filter insert (26) and/or the cover (25) are/is provided with a locking or snap-fitting connection (38).

5. Filter according to one of the previous claims, **characterised in that** the filter element (35) is a plate-type filter, which is folded in a zigzag-shaped manner and has a surrounding seal (34).

## Revendications

1. Filtre à air notamment pour l'air aspiré par un moteur à combustion interne, comprenant une garniture de filtre (17) placée dans un boîtier (10),
le boîtier (10) ayant une entrée d'air non filtrée (11) et une sortie d'air filtrée (12) ainsi qu'une ouverture (13) pour introduire la garniture de filtre (17),
la garniture de filtre (17) étant formée d'un élément de support (18) et d'un élément de filtre (19) et s'applique contre une surface d'étanchéité (14) avec interposition d'un élément d'étanchéité (15),
le boîtier (10) ayant un élément d'appui (16) pour la garniture de filtre (17),
**caractérisé en ce que**
la garniture de filtre (17) est munie d'un axe de basculement (21) qui constitue une charnière de basculement en combinaison avec un palier d'axe (22) du boîtier (10), permettant de mettre la garniture de filtre (10) dans sa position d'extrémité par un mouvement de basculement guidé autour de l'élément d'appui (16).

2. Filtre selon la revendication 1,
**caractérisé en ce que** le
boîtier (10) est muni d'un couvercle basculant (20).

3. Filtre selon l'une des revendications 1 ou 2,
**caractérisé en ce que**
la garniture de filtre (26) est munie d'un couvercle (25) qui ferme de manière étanche le boîtier (27).

4. Filtre selon l'une des revendications précédentes,
**caractérisé en ce que**
la garniture de filtre (26) et/ou le couvercle (25) est muni d'une liaison par encliquetage ou par enclipsage (38).

5. Filtre selon l'une des revendications précédentes,
**caractérisé en ce que**
l'élément de filtre (35) est un filtre à plaque pliée en accordéon et comportant un joint périphérique (34).
